(19) **Europäisches Patentamt**

**European Patent Office**

**Office européen des brevets**

(11) **EP 0 693 313 B1**

(12) **EUROPEAN PATENT SPECIFICATION**

(45) Date of publication and mention
of the grant of the patent:
**22.09.1999 Bulletin 1999/38**

(51) Int. Cl.⁶: **B01J 20/28**

(21) Application number: **95830077.4**

(22) Date of filing: **06.03.1995**

(54) **Sheet absorbing product for packaging liquid and gas releasing food articles**

Absorbierende Verpackungsfolie für Flüssigkeit und Gas freisetzende Nahrungsmittel

Feuille absorbante pour l'emballage d'articles alimentaires libérant des liquides ou gas

(84) Designated Contracting States:
**AT BE CH DE DK ES FR GB GR IE LI LU NL PT SE**

(30) Priority: **22.07.1994 IT MI941548**

(43) Date of publication of application:
**24.01.1996 Bulletin 1996/04**

(73) Proprietor: **DARAMIC, INC.**
**22844 Norderstedt (DE)**

(72) Inventors:
• **Quintavalle, Umberto,**
**P.I.L. S.r.l.**
**I-20041 Agrate Brianza (Milano) (IT)**
• **Crespi, Paolo,**
**P.I.L. S.r.l.**
**I-20041 Agrate Brianza (Milano) (IT)**

(74) Representative:
**Cicogna, Franco et al**
**Ufficio Internazionale Brevetti**
**Dott.Prof. Franco Cicogna**
**Via Visconti di Modrone, 14/A**
**20122 Milano (IT)**

(56) References cited:
**EP-A- 0 172 714        EP-A- 0 370 802**
**EP-A- 0 384 716        EP-A- 0 400 460**

• **PATENT ABSTRACTS OF JAPAN vol. 8 no. 241
(C-250) & JP-A-59 122519 (MITSUBISHI
MONSANTO)**
• **DATABASE WPI Week 9141 Derwent
Publications Ltd., London, GB; AN 91-357928 &
JP-A-03 239 753 (KAO CORP.) , 25 October 1991**

Remarks:
The file contains technical information submitted after the application was filed and not included in this specification

EP 0 693 313 B1

## Description

The present invention relates to a sheet absorbing product for packaging liquid and gas releasing food articles.

The invention also relates to a method for making said absorbing sheet product.

There are at present available on the market, for such an application, absorbing sheets comprising several layers of cellulose, and which can be coupled to a microperforated plastic material film. This film is provided for contacting the packaged goods and operates to prevent the cellulose material impregnated by liquid from disgregating and sticking to the food articles and being also provided for preventing stains due to the absorbed liquids, the microperforations allowing the released liquid to be conveyed on the cellulose material.

While the above mentioned prior absorbing sheets are rather satisfactory in operation, they, however, are affected by limitations and drawbacks.

They absorb the liquids with a high rate in a horizontal direction with respect to the sheet laying plane, and generate, in the case of colored liquids, halos about the packaged food article; as they are pressed, they operate as a sponge and release a great portion of the absorbed liquid; notwithstanding the provision of the plastic material film, the outer edges of the cellulose layers tend to flake off, with the consequence that small parts of the cellulose material stick to the packaged product; because of the multi-layered construction, moreover, they have a comparatively high thickness and volume and, accordingly, require comparatively large storing spaces; the provision of two different materials, that is cellulose and plastic materials, finally, originates recycling problems.

The document EP-A-0 400 460 discloses an absorbing product which can be formed in sheets having substantially the features of the preamble of the main Claim.

## SUMMARY OF THE INVENTION

The aim of the present invention is to overcome the above mentioned disadvantages and drawbacks of prior absorbing sheets used for packaging food articles. It is achieved with a sheet product according to claim 1, which is prepared by a method according to claim 15.

Within the scope of the above mentioned aim, a main object of the present invention is to provide a sheet product, adapted for packaging food articles, and to irreversibly absorb and hold, even if it is subjected to a pressure, liquids and gas substances released by the food articles, such as salt solutions, sugar solutions, serum, blood, oily liquids, water steam, organic substance vapours and so on, and which is constituted by a reduced thickness single layer so as to greatly reduce the space required for storing it, which does not flake off as it is impregnated by liquids, and which allows to provide packages in which the food articles are held in a perfectly dry condition, without halos and stains on the food article contacting regions.

Another object of the present invention is to provide such a flexible sheet or foil product, which has a reduced compressibility and high absorbing properties for the above mentioned liquid and gas substances, and which is essentially constituted by two tri-dimensional grids which are mutually interengaged, one formed by particles of materials having a high affinity with respect to said liquid and gas substances, and the other formed by polymeric chains forming the connective tissue.

The product according to the present invention is made, as it will be disclosed in a more detailed manner hereinafter, by subjecting the feed stock of absorbing inorganic material and polyolefines, with the desired weight proportions and in the presence of a suitable plasticizing oil and process aids, to a mixing and homogenizing operation at a sufficiently high temperature, generally 220-280°C, and for a sufficiently long time, to provide a mixture which is then extruded through a flat-head die, calendered, finished and formed to the proper size for the final use.

The polymeric grid comprises polyethylene, polypropylene, both of high or very high molecular weight and related mixtures.

The determination of the molecular weight is performed based on the intrinsic viscosity, calculated according to the ASTM D4020-81 method; optimum values are from 2 to 35 dl/g for polyethylene and from 6 to 18 dl/g for polypropylene. This amount constitutes from 10 to 50% by weight and, advantageously, from 20 to 40% by weight of the finished product.

The absorbing material grid comprises silica, silica gel, silica gel and alumina, clay earths such as bentonite and kaoline, diatomite, talc, aluminium silicate and sodium silicate, aluminium silicate, calcium silicate or the related mixtures. Advantageously, there are used the above mentioned silica and clays and, more specifically, there is used that silica obtained by precipitating with inorganic acids, in particular sulphuric acid, from water soluble silicates, such as sodium silicate.

Together with the absorbing inorganic material there is provided inert inorganic material such as carbon, graphite, titanium bioxide, iron oxide, zinc oxide, aluminium oxide, magnesium oxide, barium sulphate, calcium sulphate, calcium carbonate, magnesium carbonate or mixtures thereof.

The optimum size of the primary particles constituting the agglomerates of the absorbing inorganic materials

2

and inert materials, generally corresponds to a particle size less than 0.03μm.

Collectively this phase constitutes 90-50% and, preferably, 80-60% by weight of the finished product, with a contents of absorbing material not less than 70% by weight of the grid itself.

The components included in the finished product also comprise small amounts of a plasticizing oil (0-1% by weight), which constitutes a residue of the amounts used for the starting mixture. As plasticizing oil there are used mineral oils water-processed up to a pharmacopeia degree, petrolatum oil, synthetic white oils, such as polyisobutylene, natural oils (cotton oil, linseed oil, castor oil and derivatives thereof, epoxydated soybean oil) and the silicone oils. Advantageously, there are used petrolatum oil, water-processed mineral oils and the synthetic poly-isobutylene oil, having viscosity from 60 to 180 CST ($mm^2$/s) at 40°C and, preferably, from 80 to 140 CST at 40°C.

In the finished product there are moreover present small amounts of process aids (0.5-3% by weight), which have a specific function in the processing, such as an anti-oxidizing function for the oil, the polyethylene and polypropylene (for example sterically hindered phenols), a stabilizing agent for polyethylene and polypropylene (such as long chain esters of the thio propionic acid) and an outer lubricating agent (such as wax materials, calcium stearate, magnesium stearate).

A modified embodiment provides to include in said polymeric grid other polymeric materials different from polyethylene and polypropylene of high and very high molecular weight and, in particular, in an amount up to 30% of said grid, of low density polyethylene, high density polyethylene, low density linear polyethylene, an ethylene-propylene copolymer, an ethylene-acrylic acid and/or methacrylic acid copolymer, either not salified or partially or fully salified by alkaline metals or earth-alkaline metals, ethylene-vinyl acetate copolymer or mixtures thereof.

A further modified embodiment provides to include in the finished product amounts of a plasticizing oil greater than 1% and up to a maximum limit of 15% by weight, in order to provide the finished product with particular characteristics, such, for example, a very high duration to the atmospheric agents or a very great softness.

The several above mentioned variations are efficiently hereinbelow resumed, with respect to the final composition of the product:

-    POLYMERIC GRID: 10-59% by weight, preferably, 20-40% by weight of polyethylene, polypropylene, both of high or very high molecular weight, or mixtures thereof;
     polymeric materials different from polyethylene and propylene of high or very high molecular weight = 0-30% by weight of the grid itself.
-    ABSORBING GRID INORGANIC : 90-50% by weight and, preferably, 80-60% by weight, with a contents of absorbing material not less than 70% of said grid.
-    PROCESSING AID: 0.5-3% by weight
-    PLASTICIZING OIL: 0-15% by weight

The product according to the present invention has a water-wettable porosity from 30 to 85% of the full volume. This characteristics is determined by calculating the weight Wo of the dried sample, the weight Ww of the sample at environment temperature and as saturated by demineralized water to boiling for 0.5 hours and the weight Wa of that same water saturated sample and immersed in water at environment temperature and using the following formula, which is analogous to that suggested for determining the porosity of battery separators by BCI (Battery Council International) of Chicago, Illinois (USA)

$$\text{POROSITY } \% = \frac{Ww - Wo}{Ww - Wa} \times 100$$

Another characteristic which is typical of the above mentioned product is a very high aqueous liquid absorbing rate in a vertical direction with respect to the sheet laying plane and a practically negligible absorbing rate of said liquids along sections parallel to the sheet laying plane.

The mentioned absorbing rate, with respect to water, varies from 3 to 20 seconds to pass through a thickness of 0.5 mm and, for different thicknesses these limits vary proportionately.

The control is performed by putting a water drop on the surface of the sheet and by measuring the time taken by the drop for exiting the opposite face of the sheet.

This absorbing phenomenon along the vertical axis, with respect to the sheet laying plane, is due to viscous creeping effects occurring during the making of the web sheet, which cause an anisotropic performance during the absorbing step so as to increase the density of the absorbing particles along the axis perpendicular to the sheet laying plane.

Such a vertical type of absorbing originates a particular phenomenon of an apparent sticking between the wet bodies and the absorbing surface. It is actually a physical phenomenon in which there is formed an air free region between the wet body itself and the absorbed moisture layer.

These characteristics are very important with respect to the present invention since they prevent colored halos from forming about the packaged food articles which allows, in prior cellulose based absorbing systems are caused by horizontal migrations of the absorbed liquids; moreover, the above mentioned characteristics provide a substantial immobilization of the absorbing material with respect to the food product.

The mechanical properties of the subject product are mainly determined by the compactness and by the extension of the polymeric grid. These properties can be controlled by a dynamometer, by measuring the ultimate tensile stress on test pieces or specimens having a width of 1 cm, anchored at a starting distance of 5 cm, with an elongation rate of 50 mm/minute. The tests are carried out on specimens which are cut in parallel and perpendicularly with respect to the making direction. For the application provided according to the invention, the minimum ultimate tensile stress is of 2.5 N/mm$^2$ for specimens cut in a parallel direction, and 1N/mm$^2$ for specimens or test pieces cut in a perpendicular direction.

With respect to the surfaces, the product according to the present invention can be considered as of three main types:

- with both the faces smooth;
- with a face smooth and the other ribbed;
- with both the faces ribbed.

The ribs, which are obtained by a thermoforming operation by using, for example, suitable embossing cylinders, in a calendering machine, may have different directions; in particular, each rib may have any desired inclinations with respect to the other ribs provided on the same face and with respect to possible ribs provided on the opposite face.

The thickness of the mentioned ribs is usually included between 0.1 mm and 3 mm, whereas the thickness of the smooth base is included between 0.15 and 2 mm.

As they are parallel, their distance is from 0.15 to 15 mm.

The provision of the above mentioned ribs provides a geometric contour which allows, in addition to adjusting in a desired manner the stiffness of the finished product, to provide, in actual practice, a larger contact surface contacting the food product and a greater absorbing capability for unit of actual surface.

Other types of embossed patterns, of any suitable configurations, will allow to obtain good optical effects on the product.

The sheet product according to the present invention, which can be made in coil-form, can be used in the following configurations:

a) as a small sheet of suitable shape and size to be introduced into the available food product trays, usually made of polystyrene, foamed polystyrene, PVC etc., and being affixed on the bottom of said trays by any known means (for example by an adhesive);

b) for making trays provided for replacing the above mentioned known trays or to be associated therewith, so as to provide the advantage, in both cases, of providing an absorbing surface extended to the overall package, which can be accordingly exhibited or arranged in a slanted condition, without causing an accumulation of leakage liquid in regions which are not protected by the absorbing sheet. The trays of this type will be made by a batch-wise thermoforming operation starting from pre-cut foils or starting from a coil being continuously unwound;

c) as a sheet element for directly wrapping the food products.

In addition to the above mentioned advantages, the product according to the present invention also provides the further following advantages:

- it can be sealed as well as glued;
- with respect to prior cellulose absorbing sheets, it can be applied automatically to the holding trays;
- it can be printed on according to any prior methods, and by using inks suitable for food products, thereby constituting an advertising means.

The method for making the product according to the present invention comprises several steps, according to the following sequence:

- MIXING OF THE COMPONENTS: in a batch-wise manner, in high speed mixers or in a continuous manner directly in twin-screw extruders, provided with different feeders for each main component;

- PLASTICIZING AND HOMOGENIZING in a twin-screw extruder, in a BUSS piston extruder or in BAMBURY mixers and roller mixers and so on;
- EXTRUSION TO A FOIL, by means of a flat head die directly supplied by an extruder or a gear pump;
- CALENDERING AND COOLING, by means of specifically designed tools;
- EXTRACTION OF THE OIL, by means of a solvent, in counter current on the calendered sheet and with a subsequent recovery of the two components in a specifically designed apparatus; there are preferred chlorinated solvents and light hydrocarbons such n-hexane and n-heptane, of any suitable type for producing packages to be contacted with food articles. The recovered oil amount will vary from 100% to 85% of the amount used during the processing;
- DRYING, by hot air and/or steam solvents, adapted to recover the solvent substance used for extracting oil and present on the sheet; the residue contents, in the latter, will be usually less than 0.1 ppm;
- WINDING in coils;
- CUTTING into sheets of a size suitable for the provided application.

A technologic sequence, which is critical for making the product according to the present invention, is based on the use of co-rotating twin-screw extruders, in which the material is brought to a plasticizing temperature and homogenized in mixing sections having a specifically designed contour. Downstream of the extruder, a gear pump will convey the material being processed to the subsequent above mentioned finishing steps.

The raw materials can be supplied to the extruder in the form of a preformed mixture, or they can be supplied by a plurality of separated feeding units the number of which will correspond to that of the main raw materials, the powder additives being usually supplied with a polymer.

In the second case, the inner construction of the extruder will form the mixture in particular regions before the plasticizing operation proper.

The basic condition in order to provide an even and smooth plasticizing of the polymer and its subsequent homogenization at a stable rheologic regimen, is provided by an even distribution of the oil on the inorganic material used for making the absorbing grid. This operation is performed by using the available co-rotating twin-screw extruders, which will provide different mixing arrangements as well as different plasticizing patterns depending on the material being used.

In the case of preparing the product according to the present invention, this is carried out under the following conditions:

- the inorganic material is supplied at the start by the screw, by gravimetric metering devices adapted to provide an even and accurate metering;
- at a distance not greater than 4 diameters, corresponding to a 1 zone according to the standards of the makers of these extruders, there is supplied the oil, as pre-heated usually to about 100°C, by gear continuous metering pumps; the amount of supplied oil will usually corresponds to 150-250% of the inorganic material loaded amount;
- immediately downstream and for at least 2 zones (8 diameters), the inorganic material and oil are mixed with a mixing pattern suitable to increase the contact time, instead of providing high shear efforts on the material, thereby low transport capability patterns are preferred. Moreover, the provision at one end of a reversed step element will increase the filling-in coefficient. In order to reduce the viscosity of the oil and favour the mixing operation, it is necessary a temperature not less than 200°C and preferably not less than 150°C;
- after at least 4 zones (16 diameters) from the inorganic material supplying point and, preferably, after 6 zones (24 diameters), there is introduced the polymeric material mixed with the provided additives and, also in this case, will be used gravimetric metering devices adapted to provide an even and accurate metering.

In order to provide a progressive plasticizing and homogenizing by means of the oil operating as an inner lubricating agent of the polymeric chains of which it will reduce the viscosity, in this region the temperature must be held from 200 to 300°C and, preferably, from 220 to 280°C.

With respect to the thermoforming of the product sheets, excessive times and temperatures, while improving the geometric pattern of the produced article of manufacture, can involve a very high reduction of the porosity; the optimum working conditions will provide, accordingly:

- a temperature from 140 to 250°C, and, preferably, from 160 to 200°C;
- total heating and molding times of

  20 seconds max for thicknesses greater than 0.7 mm;
  15 seconds max for thicknesses between 0.4 and 0.7 mm;

8 seconds max for thicknesses less than 0.4 mm.

Typical values are, at a temperature of 200°C:

15 seconds for thicknesses of 0.65 mm;
10 seconds for thicknesses of 0.5 mm;
6 seconds for thickness of 0.25 mm.

**Claims**

1. A liquid and gas absorbing sheet product, having a reduced compressibility and a high absorption for gas and liquid substances, said sheet product being constituted by two tri-dimensional grids one being an inorganic grid formed by particles of materials having a high affinity with respect to said liquid and gas substances and the other being a polymeric grid formed by polymeric chains forming a connective tissue of said sheet product, characterized in that said polymeric grid forms 10-15% of the total weight of said sheet product and includes polyethylene, polypropylene or mixtures thereof having prior to the preparation of the sheet product an intrinsic viscosity, according to ASTM D4020-81, of 2-35 dl/g and 6-18 dl/g, and that said inorganic grid is highly porous inorganic grid having a high absorbing capability of said liquid and gas substances and constitutes 90-50% of said total weight of said sheet product and includes, for a level not less than 70% of said inorganic grid, silica, silica gel, silica gel and aluminium, clay earths, diatomite, talc, aluminium and sodium silicate, aluminium silicate, calcium silicate or mixtures thereof and, for the remaining part to 100% of said inorganic grid, carbon, graphite, titanium bioxide, iron oxide, zinc oxide, aluminium oxide, magnesium oxide, calcium sulphate, calcium carbonate, magnesium carbonate and mixtures thereof said sheet product further comprising from 0.5 to 3% of said total weight of processing acids including an anti-oxidizing agent, a stabilizing agent, and an outer lubricating agents, said sheet product having a water porosity, determined by a BCI method, from 30 to 85% of said total volume and a very water absorbing rate in a vertical direction with respect to a laying plane of said sheet product and a comparatively negligible absorbing rate in a direction parallel to said laying plane of said sheet product.

2. An absorbing sheet product according to Claim 1, wherein said polymeric grid constitutes from 20 to 40% of said total weight and said inorganic grid constitutes 80-60% of said total weight.

3. An absorbing sheet product according to Claims 1 and 2, wherein said inorganic grid comprises silica prepared from sodium silicate by a precipitation with inorganic acids and/or clay earths of the bentonite type and kaoline.

4. An absorbing sheet product according to Claims 1 and 3, wherein said polymeric grid comprises, up to 30% of the weight thereof, low density polyethylene, high density polyethylene, low density linear polyethylene, and ethylene-propylene copolymer, and ethylene-acrylic and/or methacrilic acid copolymer not salified or either partially or fully salified by alkaline metals or alkaline-earth metals, ethylene-vynil acetate copolymers or mixtures thereof.

5. An absorbing sheet according to Claims 1 to 4, wherein said anti-oxidizing agent comprises sterically hindered phenols, said stabilizing agent comprises long chain esters of thiopropionic acid, and said outer lubricating agent comprises wax materials, calcium stearate and magnesium stearate.

6. An absorbing sheet product according to Claims 1 to 5, wherein said absorbing products also contain a plasticizing oil comprising hydroprocessed mineral oils, petrolatum oil, synthetic white oil of the polyisobutylene type, cotton oil, linseed oil, castor oil, or derivatives thereof, epoxydized soyben oil, siliconic oils or mixtures thereof.

7. An absorbing sheet product according to Claim 6, wherein said hydroprocessed mineral oils, said petrolatum oil and said white polyisobuthylene oil have at 40°C a viscosity of 60-180 CST, preferably from 80 to 140 CST ($mm^2$/s).

8. An absorbing product according to Claims 1 to 7, wherein the primary particles of said inorganic grid have a particle size less than $0.03\mu M$.

9. An absorbing sheet product according to Claims 1 to 8, wherein it is formed as a sheet to be introduced into food article trays, or as a sheet for wrapping the food products.

10. An absorbing sheet product according to Claim 1, wherein said water vertical absorbing rate is defined by a time from 3 to 20 seconds to allow water to pass through a thickness of 0.5 mm of said sheet product.

11. An absorbing sheet product according to Claims 1 to 10, wherein said sheet product has a minimum ultimate tensile stress on specimens cut in parallel and perpendicularly to the making direction of said sheet product of respectively 2.5 and 1 $N/mm^2$.

12. An absorbing sheet product according to Claims 1 to 11, wherein the two faces of said sheet product are smooth or both said faces or a single face thereof are provided with ribs.

13. An absorbing sheet product according to Claim 12, wherein each said rib has any desired inclination with respect to the other ribs provided on the same face or to the possible ribs provided on the opposite face.

14. An absorbing sheet product according to Claims 12 and 13, wherein said ribs have a thickness from 0.1 to 3 mm, the smooth base thereof has a thickness of 0.15-2 mm, and the distance of parallel ribs is of 0.5-15 mm.

15. A method for making an absorbing sheet product according to the preceding claims, wherein said method comprises the steps of:

- mixing of the components for making said sheet product;

- plasticizing and homogenizing said mixed sheet product components;

- extruding said plasticized and homogenized components to a foil;

- calendering said foil to a sheet and coiling said sheet;

- extracting plasticizing oil by a solvent and recovering it;

- drying and recovering said solvent;

- winding said sheet to provide a sheet coil; and

- cutting said sheet oil to size into individual sheets for forming trays or directly wrapping food articles or thermoforming into trays.

16. A method according to Claim 15, wherein said mixing plasticizing and homogenizing steps are performed in a co-rotating twin-screw extruder having a number of separated feeding devices corresponding to a number of the main raw materials, inorganic absorbing material, plasticizing oil and polyolefine polymer.

17. A method according to Claims 15 and 16, wherein said inorganic material is supplied at the start of the extruding screw, said plasticizing oil, in an amount corresponding to 125-250% of said inorganic material amount and pre-heated to about 100°C is supplied after at maximum 4 diameters, said mixing step is continued for at least 8 diameters at a temperature not less than 150°C, and said polyolefinic polymers and the additives thereof are supplied after at least 16 diameters from the absorbing product introducing point and said homogenizing step is continued for at least other 8 said diameters at a temperature of 200-300°C.

18. A method according to Claim 17, wherein said polyolefinic polymers and additives thereof are supplied after 24 diameters from the absorbing product introducing point, the homogenizing temperature being held at from 220 to 280°C.

19. A method thermoforming a product according to Claims 1 to 14, wherein said method provides a molding temperature from 160 to 220°C, and a maximum molding time of 20 seconds for thicknesses of said sheet greater than 0.7 mm, a maximum molding time of 15 seconds for thicknesses of said sheet from, 0.4 to 7 mm, and a maximum molding time of 8 seconds for thicknesses of said sheet less than 0.4 mm.

**Patentansprüche**

1. Flüssigkeits- und gasabsorbierendes Blattprodukt, welches eine reduzierte Kompressibilität und eine hohe Absorption für Gas- und Flüssigkeitssubstanzen aufweist, wobei das Blattprodukt aus zwei dreidimensionalen Gittern aufgebaut ist, wobei eines ein organisches Gitter ist, welches durch Partikel von Materialien gebildet ist, welche eine hohe Affinität zu den Flüssigkeits- und Gassubstanzen aufweist, und wobei das andere ein polymeres Gitter ist, welches durch Polymerketten gebildet ist, welche ein verbindendes Gewebe des Blattprodukts bildet,

**dadurch gekennzeichnet,** daß

das Polymergitter 10 - 15 % des Gesamtgewichts des Blattprodukts bildet und Polyäthylen, Polypropylen oder Mischungen daraus beinhaltet, welche vor der Herstellung des Blattprodukts eine intrinsische Viskosität gemäß ASTM D4020-81 von 2-35 dl/g und 6-18 dl/g aufweisen, und daß das anorganische Gitter ein hochporöses anorganisches Gitter ist, welches eine hohe Absorbierfähigkeit bezüglich der Flüssigkeits- und Gassubstanzen aufweist und 90 - 50 % des Gesamtgewichts des Blattprodukts bildet und für ein Niveau von nicht weniger als 70 % des anorganischen Gitters Silika, Silikagel, Silikagel und Aluminum, Tonerde, Diatomit, Talk, Aluminum und Sodiumsilikat, Aluminiumsilikat, Kalziumsilikat oder Mischungen derselben beinhaltet, und für den verbleibenden Teil bis 100 % des anorganischen Gitters Karbon, Graphit, Titanbioxid, Eisenoxid, Zinkoxid, Aluminiumoxid, Magnesiumoxid, Kalziumsulfat, Kalziumkarbonat, Magnesiumkarbonat und Mischungen derselben aufweist, wobei das Blattprodukt des weiteren zwischen 0,5 und 3 % des Gesamtgewichts Prozeßsäuren aufweist, einschließlich einem Antioxidationswirkstoff, einem Stabilisationswirkstoff und einem äußeren Schmierwirkstoff, wobei das Blattprodukt eine durch eine BCI-Verfahren ermittelte Porosität von 30 bis 85 % des Gesamtvolumens und eine hohe Wasserabsorptionsrate in einer vertikalen Richtung unter Bezug auf eine Liegeebene des Blattprodukts und eine verhältnismäßig unwesentliche Absorptionsrate in einer Richtung parallel zu der Liegeebene des Blattprodukts aufweist.

2. Absorbierendes Blattprodukt nach Anspruch 1,
   **dadurch gekennzeichnet,** daß
   das Polymergitter 20 bis 40 % des Gesamtgewichts bildet und das anorganische Gitter 80 bis 60 % des Gesamtgewichts bildet.

3. Absorbierendes Blattprodukt nach Anspruch 1 und 2,
   **dadurch gekennzeichnet,** daß
   das anorganische Gitter Silika aufweist, welches aus Sodiumsilikat durch eine Präparation mit anorganischen Wirkstoffen und/oder Tonerde vom Bentonit-Typ und Kaolin hergestellt wurde.

4. Absorbierendes Blattprodukt nach Anspruch 1 und 3,
   **dadurch gekennzeichnet,** daß
   das Polymergitter bis zu 30 % des Gewichts desselben Polyäthylen mit niedriger Dichte, Polyäthylen mit hoher Dichte, Linear-Polyäthylen mit niedriger Dichte und Äthylen-Propylenkopolymer und Äthylen-Acryl und/oder methakrylisches Wirkstoffpolymer aufweist, welches entweder kein Salz gebildet hat oder teilweise oder vollständig mit alkalischen Metallen oder alkalischen Erdmetallen, Äthylen-Vinyl-Azetat-Kopolymeren oder Mischungen denselben ein Salz gebildet hat.

5. Absorbierendes Blattprodukt nach den Ansprüchen 1 bis 4,
   **dadurch gekennzeichnet,** daß
   der antioxidierende Wirkstoff sterikalisch gehinderte Phenole, der stabilisierende Wirkstoff langkettige Ester aus thiopropionischem Wirkstoff aufweist und der äußere Schmierwirkstoff Wachsmaterialien, Kalziumstearat und Magnesiumstearat aufweist.

6. Absorbierendes Blattprodukt nach den Ansprüchen 1 bis 5,
   **dadurch gekennzeichnet,** daß
   die absorbierenden Produkte auch ein plastifizierendes Öl aufweisen, welches hydroprozessierte Mineralöle, Petrolatumöl, synthetisches Weißöl des Polyisobutylen-Typs, Baumwollöl, Leinsamenöl, Kastoröl oder Derivative davon, epoxidisiertes Sojabohnenöl, silikonische Öle oder Mischungen aus denselben aufweist.

7. Absorbierendes Blattprodukt nach Anspruch 6,
   **dadurch gekennzeichnet,** daß
   die hydroprozessierten Mineralöle, das Petrolatumöl und das weiße Polyisobutylenöl bei 40 °C eine Viskosität von 60 bis 180 CST, vorzugsweise von 80 bis 140 CST ($mm^2$/s) aufweisen.

8. Absorbierendes Blattprodukt nach den Ansprüchen 1 bis 7,
   **dadurch gekennzeichnet,** daß
   die Primärpartikel des anorganischen Gitters eine Partikelgröße von weniger als 0,03 $\mu$m aufweisen.

9. Absorbierendes Blattprodukt nach den Ansprüchen 1 bis 8,
**dadurch gekennzeichnet,** daß
es als in Lebensmittelartikelbehälter einzuführendes Blatt oder als Blatt zum Einpacken der Lebensmittelprodukte ausgebildet ist.

10. Absorbierendes Blattprodukt nach Anspruch 1,
**dadurch gekennzeichnet,** daß
die vertikale Wasserabsorbierungsrate durch eine Zeit von 3 bis 20 Sekunden definiert ist, um es dem Wasser zu erlauben, durch eine Dicke von 0,5 mm des Blattprodukts durchzufließen.

11. Absorbierendes Blattprodukt nach den Ansprüchen 1 bis 10,
**dadurch gekennzeichnet,** daß
das Blattprodukt eine minimale Zugfestigkeit in der parallelen und der senkrechten Richtung zu der Herstellungsrichtung des Blattprodukts von 2,5 bzw. 1 $N/mm^2$ aufweist.

12. Absorbierendes Blattprodukt nach den Ansprüchen 1 bis 11,
**dadurch gekennzeichnet,** daß
die zwei Seiten des Blattprodukts glatt sind oder daß beide Seiten oder eine einzelne Seite desselben mit Rippen versehen sind.

13. Absorbierendes Blattprodukt nach Anspruch 12,
**dadurch gekennzeichnet,** daß
jede Rippe eine gewünschte Neigung bezüglich den anderen auf derselben Seite angebrachten Rippen oder der möglicherweise auf der gegenüberliegenden Seite angebrachte Rippen aufweist.

14. Absorbierendes Blattprodukt nach den Ansprüchen 12 und 13,
**dadurch gekennzeichnet,** daß
die Rippen eine Dicke von 0,1 bis 3 mm aufweisen, wobei die glatte Basis derselben eine Dicke von 0,15 bis 2 mm aufweist und der Abstand von parallelen Rippen 0,5 bis 15 mm beträgt.

15. Verfahren zum Herstellen eines absorbierenden Blattprodukts nach den vorhergehenden Ansprüchen,
**dadurch gekennzeichnet,** daß
das Verfahren folgende Schritte aufweist:

- Mischen der Komponenten zum Herstellen des Blattprodukts;
- Plastifizieren und Homogenisieren der gemischten Komponenten des Blattprodukts;
- Extrudieren der plastifizierten und homogenisierten Bauteile zu einer Folie;
- Kalandrieren der Folie zu einem Blatt und Aufrollen des Blatts;
- Herausziehen von plastifizierendem Öl durch ein Lösungsmittel und Wiedergewinnen desselben;
- Trocknen und Wiedergewinnen des Lösungsmittels;
- Aufwickeln des Blatts, um eine Blattrolle zu erhalten; und
- Schneiden des Ölblatts auf Größe in einzelne Blätter zur Bildung von Behältern oder direktes Einwickeln von Lebensmittelartikeln oder Thermoformen in Behälter.

16. Verfahren nach Anspruch 15,
**dadurch gekennzeichnet,** daß
die Misch-, Plastifizier- und Homogenisierschritte in einem gleich schnell rotierenden Doppelschraubenextruder durchgeführt werden, welcher eine Anzahl von getrennten Zuführeinrichtungen aufweist, welche einer Anzahl der hauptsächlichen Rohmaterialien, anorganischem Absorptionsmaterial, plastifizierendem Öl und polyolefinem Polymer entspricht.

17. Verfahren nach den Ansprüchen 15 und 16,
**dadurch gekennzeichnet,** daß
das anorganische Material am Beginn der Extrudierschraube zugeführt wird, das plastifizierende Öl in einer Menge, die 125 - 250 % des anorganischen Materials entspricht und bei ungefähr 100 °C vorgeheizt wird, nach maximal 4 Durchmessern zugeführt wird, der Mischschritt für mindestens 8 Durchmesser bei einer Temperatur von nicht weniger als 150 °C weitergeführt wird und die polyolefinen Polymere und die Zusätze derselben nach mindestens 16 Durchmessern von dem Einführpunkt für das absorbierende Produkt zugeführt werden und der homogenisierende Schritt für mindestens noch einmal 8 Durchmesser bei einer Temperatur von 200 - 300 °C weitergeführt wird.

18. Verfahren nach Anspruch 17,
   **dadurch gekennzeichnet,** daß
   die polyolefinen Polymere und die Zusätze derselben nach 24 Durchmessern vom Einführungspunkt für das absorbierende Produkt zugeführt werden, wobei die Homogenisiertemperatur im Bereich von 220 - 280 °C gehalten wird.

19. Verfahren zum Thermoformen eines Produkts gemäß der Ansprüche 1 bis 14,
   **dadurch gekennzeichnet,** daß
   das Verfahren eine Schmelztemperatur von 160 bis 220 °C vorsieht und eine maximale Schmelzzeit von 20 Sekunden für Dicken des Blatts von größer als 0,7 mm, eine maximale Schmelzzeit von 15 Sekunden für Dicken des Blatts von 0,4 bis 7 mm und eine maximale Schmelzzeit von 8 Sekunden für Dicken des Blatts von weniger als 0,4 mm.

## Revendications

1. Produit en feuille (《 sheet product 》) absorbant le liquide et le gaz, présentant une compressibilité réduite et une absorption élevée pour les substances gazeuses et liquides, ledit produit en feuille étant constitué par deux grilles (《 grids 》) tri-dimensionnelles, l'une étant une grille inorganique formée par des particules de matériaux présentant une affinité élevée par rapport auxdites substances liquides et gazeuses, et l'autre étant une grille polymère formée par des chaînes polymères formant un tissu de connexion (《 connective tissue 》) dudit produit en feuille, caractérisé en ce que ladite grille polymère forme 10-15 % du poids total dudit produit en feuille et inclut du polyéthylène, du polypropylène ou des mélanges de ceux-ci, présentant, avant la préparation du produit en feuille, une viscosité intrinsèque, conformément à ASTM D4020-81, de 2-35 dl/g et 6-18 dl/g, et en ce que ladite grille inorganique est une grille inorganique hautement poreuse présentant une haute aptitude d'absorption desdites substances liquides et gazeuses et constitue 90-50 % dudit poids total dudit produit en feuille et inclut, pour un niveau non inférieur à 70 % de ladite grille inorganique, de la silice, du gel de silice, du gel de silice et de l'aluminium, des terres d'argile (《 clay earths 》), de la diatomite, du talc, du silicate d'aluminium et de sodium, de l'alumino-silicate, du silicate de calcium ou des mélanges de ceux-ci et, pour la part complémentaire jusqu'à 100 % de ladite grille inorganique, du carbone, du graphite, du bioxyde de titanium, de l'oxyde de fer, de l'oxyde de zinc, de l'oxyde d'aluminium, de l'oxyde de magnésium, du sulfate de calcium, du carbonate de calcium, du carbonate de magnésium et des mélanges de ceux-ci, ledit produit en feuille comprenant également de 0.5 à 3 % dudit poids total d'acides de traitement (《 processing acids 》) incluant un agent anti-oxydant, un agent stabilisant, et un agent extérieur de lubrification, ledit produit en feuille présentant une porosité à l'eau, déterminée par une méthode BCI, de 30 à 85 % dudit volume total et un taux d'absorption d'eau très élevé dans une direction verticale par rapport à un plan de pose ("laying plane") dudit produit en feuille et un taux d'absorption comparativement négligeable dans une direction parallèle audit plan de pose dudit produit en feuille.

2. Produit en feuille absorbant selon la revendication 1, dans lequel ladite grille polymère constitue de 20 à 40 % dudit poids total et ladite grille inorganique constitue de 80 à 60 % dudit poids total.

3. Produit en feuille absorbant selon les revendications 1 et 2, dans lequel ladite grille inorganique comprend de la silice préparée à partir de silicate de sodium par précipitation avec des acides inorganiques et/ou des terres d'argile du type bentonite et du kaolin.

4. Produit en feuille absorbant selon les revendications 1 et 3, dans lequel ladite grille polymère comprend, jusqu'à 30 % en poids, du polyéthylène basse densité, du polyéthylène haute densité, du polyéthylène linéaire basse densité, et un copolymère éthylène-propylène, et un copolymère d'acide éthylène-acrylique et/ou méthacrilique non salifié ou partiellement ou totalement salifié par des métaux alcalins ou des métaux de terre alcaline (《 alkaline-earth 》), des copolymères d'acétate éthylène-vinyle ou des mélanges de ceux-ci.

5. Feuille absorbante selon les revendications 1 à 4, dans laquelle ledit agent antioxydant comprend des phénols à empêchement stérique ("sterically hindered phenols"), ledit agent stabilisant comprend des esters de longue chaîne d'acide thiopropionique, et ledit agent lubrifiant extérieur comprend des matériaux cireux ("wax materials"), du stéarate de calcium et du stéarate de magnésium.

6. Produit en feuille absorbant selon les revendications 1 à 5, dans lequel lesdits produits absorbants contiennent aussi une huile plastifiante comprenant des huiles minérales hydrogénées ("hydroprocessed"), de l'huile de graisse verte (《 petrolatum oil 》), de l'huile blanche synthétique du type polyisobutylène, de l'huile de coton, de l'huile de lin, de l'huile de castor, ou des dérivés de ceux-ci, de l'huile de soja ("soyben") époxydée, des huiles de silicone ou des mélanges de ceux-ci.

7. Produit en feuille absorbant selon la revendication 6, dans lequel lesdites huiles minérales hydrogénées, ladite huile de graisse verte et ladite huile blanche polyisobutylène présentent à 40°C une viscosité de 60-180 CST, de préférence de 80 à 140 CST (mm$^2$/s).

8. Produit absorbant selon les revendications 1 à 7, dans lequel les particules primaires de ladite grille inorganique présentent une dimension de particule inférieure à 0.03 $\mu$m.

9. Produit en feuille absorbant selon les revendications 1 à 8, lequel est formé en feuille pour être introduit dans des plateaux pour articles alimentaires, ou en feuille pour envelopper des produits alimentaires.

10. Produit en feuille absorbant selon la revendication 1, dans lequel ledit taux d'absorption vertical d'eau est défini par une durée allant de 3 à 20 secondes pour permettre à l'eau de passer à travers une épaisseur de 0.5 mm dudit produit en feuille.

11. Produit en feuille absorbant selon les revendications 1 à 10, lequel produit en feuille présente, sur des spécimens découpés en parallèle et perpendiculairement à la direction de fabrication dudit produit en feuille, une contrainte de traction ultime minimum de respectivement 2.5 et 1 N/mm$^2$.

12. Produit en feuille absorbant selon les revendications 1 à 11, dans lequel les deux faces dudit produit en feuille sont lisses ou bien lesdites deux faces ou une seule de ses faces sont munies de nervures.

13. Produit en feuille absorbant selon la revendication 12, dans lequel chacune desdites nervures présente toute inclinaison désirée par rapport aux autres nervures prévues sur la même face ou aux nervures éventuelles prévues sur la face opposée.

14. Produit en feuille absorbant selon les revendications 12 et 13, dans lequel lesdites nervures présentent une épaisseur allant de 0.1 à 3 mm, leur base lisse ayant une épaisseur de 0.15-2 mm, et la distance des nervures parallèles étant de 0.5-15 mm.

15. Procédé de fabrication d'un produit en feuille absorbant selon les revendications précédentes, lequel procédé comprend les étapes de :

- mélange des composants pour fabriquer ledit produit en feuilles ;

- plastification et homogénéisation desdits composants mélangés du produit en feuille ;

- extrusion desdits composants plastifiés et homogénéisés pour obtenir une lame ;

- laminage de ladite lame pour obtenir une feuille et bobinage de ladite feuille ;

- extraction de l'huile de plastification au moyen d'un solvant et récupération de celle-ci ;

- séchage et récupération dudit solvant ;

- enroulement de ladite feuille pour fournir une bobine de feuille ; et

- découpage à dimension de ladite bobine de feuille en feuilles individuelles pour le formage de plateaux ou l'emballage direct d'articles alimentaires ou le thermoformage en plateaux.

16. Procédé selon la revendication 15, dans lequel lesdites étapes de plastification et d'homogénéisation du mélange sont réalisées dans une boudineuse à deux vis ("twin-screw extruder") en rotation couplée, présentant un nombre de dispositifs d'alimentation séparés correspondant à un nombre de matériaux bruts principaux, matériau absorbant inorganique, huile plastifiante et polymère polyoléfine.

**17.** Méthode selon les revendications 15 et 16, dans laquelle ledit matériau inorganique est fourni au début de la vis d'extrusion, ladite huile plastifiante, en une quantité correspondant à 125-250 % de la quantité dudit matériau inorganique et préchauffée à environ 100°C est fournie après au maximum 4 diamètres, ladite étape de mélange est continuée pendant au moins 8 diamètres à une température qui n'est pas inférieure à 150°C, et lesdits polymères polyoléfiniques et leurs additifs sont fournis après au moins 16 diamètres du point d'introduction du produit absorbant et ladite étape d'homogénéisation est continuée pendant au moins 8 autres desdits diamètres à une température de 200-300°C.

**18.** Méthode selon la revendication 17, dans laquelle lesdits polymères polyoléfiniques et leurs additifs sont fournis après 24 diamètres à partir du point d'introduction du produit absorbant, la température d'homogénéisation étant portée à une température allant de 220 à 280°C.

**19.** Méthode pour thermoformer un produit selon les revendications 1 à 14, laquelle méthode prévoit une température de moulage allant de 160 à 220°C, et une durée de moulage maximum de 20 secondes pour des épaisseurs de ladite feuille supérieures à 0.7 mm, une durée de moulage maximum de 15 secondes pour des épaisseurs ladite feuille allant de 0.4 à 7 mm, et une durée de moulage maximum de 8 secondes pour des épaisseurs de ladite feuille inférieures à 0.4 mm.